# EUROPÄISCHE PATENTSCHRIFT

(11) **EP 0 490 341 B1**
(45) Veröffentlichungstag und Bekanntmachung des Hinweises auf die Patenterteilung: **28.08.1996**
(21) Anmeldenummer: 91121173.8
(22) Anmeldetag: 10.12.1991
(51) Int. Cl.: E05F 11/40, B60J 7/057

(54) **Hubantrieb zur elektrischen Betätigung einer Fensterscheibe oder eines Schiebedachs eines Kraftfahrzeugs**
Electric drive control for vehicle window or sliding roof
Dispositif d'actionnement électrique pour fenêtre ou toit coulissant de véhicule

(30) Priorität: 10.12.1990 DE 4039411
(43) Veröffentlichungstag der Anmeldung: 17.06.1992
(73) Patentinhaber: MAGNET-MOTOR GESELLSCHAFT FÜR MAGNETMOTORISCHE TECHNIK MBH, D-82319 Starnberg (DE)
(72) Erfinder: Heidelberg, Götz, W-8130 Starnberg-Percha (DE); Gründl, Andreas, Dr., W-8000 München 70 (DE); Ehrhart, Peter, Dr., W-8000 München 70 (DE)
(74) Vertreter: Klunker . Schmitt-Nilson . Hirsch

(56) Entgegenhaltungen:
- GB-A- 839 520
- US-A- 2 945 691
- US-A- 3 141 663

## Beschreibung

Gegenstand der Erfindung ist ein Hubantrieb zur elektrischen Betätigung einer Fensterscheibe oder eines Schiebedachs eines Kraftfahrzeugs nach dem Oberbegriff des Anspruchs 1 oder des Anspruchs 2.

Ein solcher Hubantrieb ist aus der der GBA-839 520 bzw. der US-A-945 691 bekannt. In beiden Fällen ist der Elektromotor am Rahmenteil des Fensters befestigt.

Die Drehung des Motors wird über die Gewindespindel direkt in eine Hubbewegung für die Scheibe beziehungsweise das Schiebedach umgesetzt.

Die Druckschriften zeigen zwei Varianten des Zusammenwirkens von Rotorteil des Elektrokleinmotors und Gewindespindel, nämlich einmal den direkten Gewindeeingriff des Rotorteils mit der Gewindespindel, zum anderen die starre Kopplung von Gewindespindel und Rotorteil.

In ersterem Fall benötigt der bekannte Hubantrieb (GB-A-839 520) bei abgesenkter Fensterscheibe Platz. in den die Gewindespindel ausweichen kann. Zweckmäßigerweise ist die Spindel deshalb biegeelastisch in einer gekrümmtten Führungsschiene aufgenommen. In letzterem Fall ist der Elektromotor am unteren Ende der Gewindespindel anzuordnen, was möglicherweise schwierig ist.

Aufgabe der Erfindung ist die Schaffung eines platzsparenden Hubantriebs.

Gemäß Anspruch 1 ist vorgesehen, daß der Rotorteil konzentrisch zu seiner Längsachse ein Innenloch mit einem Innengewinde aufweist, welches mit der Gewindespindel in Eingriff steht, wobei der Elektrokleinmotor an der Scheibe beziehungsweise an dem Schiebedach befestigt sein, während die Gewindespindel an einem Rahmenteil befestigt ist. Der Begriff "Rahmenteil" bedeutet speziell den unteren Bereich einer Kraftfahrzeugtür beziehungsweise den an die Schiebedachöffnung eines Kraftfahrzeugdachs anschließenden Dachbereich.

Das Befestigen des Elektrokleinmotors an der Scheibe beziehungsweise an dem Schiebedach macht zwar eine bruchsichere und flexible Leitungszuführung zu dem Elektromotor erforderlich, dafür kann sich der Elektromotor auch über die gesamte Länge der Gewindespindel bewegen, und die Gewindespindel braucht nur relativ wenig Platz in Längsrichtung. Befestigt man hingegen den Elektromotor an dem Rahmenteil, so muß bei geschlossener Fensterscheibe der Elektromotor weit genug unterhalb der Unterkante der Fensterscheibe angeordnet sein, damit Platz genug für den Abwärtshub der Scheibe vorhanden ist. Wenn die Scheibe nach unten bewegt ist. ragt die Gewindespindel von der dann abgesenkten Fensterscheibe nach unten in den Türrahmen. Damit steht also für den Hub der Fensterscheibe maximal die halbe Höhe des geschlossenen Türrahmenteils zur Verfügung.

Gleiches gilt im Prinzip auch für das Schiebedach, nur ist hier üblicherweise im hinteren Dachbereich ausreichend Platz vorhanden für den Bewegungshub der starr mit dem Schiebdach verbundenen Gewindespindel.

Eine alternative Ausgestaltung der Erfindung (Anspruch 2) sieht vor, daß die Gewindespindel mit einem Ende konzentrisch am Rotorteil fixiert ist. Der Elektrokleinmotor dreht also die gesamte Gewindespindel. Dementsprechend ist eine mit der Gewindespindel in Eingriff stehende Gegenmutter vorhanden. Dabei ist der Elektrokleinmotor an der Scheibe beziehungsweise dem Schiebedach befestigt, während die Gewindespindel mit einer an dem Rahmenteil fixierten Gegenmutter in Eingriff steht.

Ist dcr Elektromotor am unteren Er.de der Fensterscheibe (bzw. des Schiebedachs) angebracht, während die Gegenmutter am Rahmenteil befestigt ist, so muß "oberhalb" der Gegenmutter bei geschlossener Fensterscheibe Platz für die Gewindespindel sein, und bei abgesenkter Fensterscheibe muß entsprechend viel Platz unterhalb der Gegenmutter vorhanden sein. Dadurch beschränkt sich der Hubbereich der Fensterscheibe. Bei dem erfindungsgemäßen Hubantrieb ist dieser integraler Bestandteil der Scheibe (des Schiebedachs), in jedem Fall ist der Elektrokleinmotor gewissermaßen Bestandteil der Scheibe (des Schiebedachs), wie unten noch näher erläutert wird.

Grundsätzlich ist es sowohl für die Fensterscheibe als auch für das Schiebedach möglich, einen einzigen Elektromotor mit einer einzigen Gewindespindel vorzusehen, wobei dann Motor, Gewindespindel und gegebenenfalls die Gegenmutter in der Regel etwa mittig bezüglich der Scheibe beziehungsweise bezüglich dem Schiebedach angeordnet sind. Vorzugsweise sind dann noch spezielle Seitenführungen für das zu verschiebende Teil vorhanden.

Gemäß einer speziellen Ausgestaltung der Erfindung kann man zwei Elektrokleinmotoren und zwei im wesentlichen zueinander parallele Gewindespindeln vorsehen, wobei dann die Elektromotoren synchron betrieben werden. Die Gewindespindeln werden dann an den beiden Seitenbereichen von Scheibe/Schiebedach bzw. Rahmenteil angeordnet. Man kann die Gewindespindeln an beiden Enden fixieren bzw. drehbar lagern, um eine stabile Anordnung zu erzielen.

Während bei Schiebedächern meist gerade Gewindespindeln eingesetzt werden können, da das Dach mehr oder weniger in einer Ebene liegt, sind Fensterscheiben von Kraftfahrzeugtüren häufig gekrümmt. Um eine platzsparende Konstruktion zu erhalten, sieht die Erfindung vor, daß die Gewindespindel bzw. die Gewindespindeln eine Krümmung aufweisen, die der Krümmung der Bewegungsbahn der Scheibe bzw. des Schiebedachs im wesentlichen entspricht.

Bei dem Schiebedach lassen sich Elektromotor, Gewindespindel beziehungsweise Gegenmutter zum Beispiel mittels Laschen oder dergleichen seitlich oder am hinteren Ende des Schiebedachs befestigen. Die Anbringung der Antriebsteile an der Scheibe erfolgt an deren Unterkante. Hierzu kann am unteren Rand der Scheibe eine Ausformung vorgesehen sein, an der der Elektromotor beziehungsweise die Gegenmutter oder ein Ende der Gewindespindel angebracht wird. Man kann aber auch im Sinne einer leichteren Herstellbarkeit die untere Scheibenkante im wesentlichen gerade lassen. Man kann den Elektromotor mittels Schrauben an der Scheibe befestigen, vorzugsweise durch Scheibenlöcher hindurch. Man kann jedoch auch den Elektromotor an die Scheibe ankleben.

In der Regel sind Führungen für die Scheibe/das Schiebedach vorhanden. Insbesondere bei zwei Gewindespindeln kann die Führung einfacher ausgeführt oder gar weggelassen sein.

Bevorzugt ist der Elektromotor als dauermagnetisch erregter Motor mit elektronischer Kommutierung ausgebildet. Die Kommutier- und Steuerelektronik kann am Rahmenteil angebracht sein, bevorzugt wird das Kommutier- und Steuerteil jedoch direkt am oder im Gehäuse des Elektrokleinmotors angeordnet. Dies ermöglicht eine sehr einfache Montage.

Erfindungsgemäß ist die Steuerungselektronik mit besonderen Funktionen ausgestattet: eine Speicher- oder Memory-Funktion ermöglicht das Einspeichern bestimmter Haltepositionen; eine Kraftbegrenzung gewährleistet eine Absicherung gegen Beschädigungen. Eine wegabhängige Geschwindigkeitssteuerung sorgt dafür, daß die Fensterscheibe beziehungsweise das Schiebedach sanft in die jeweilige Endposition gefahren wird. Ferner können besondere Beschleunigungen oder Beschleunigungsänderungen vorgesehen werden. Eine Kopplung mit dem Türschloß oder einem Türschließkontakt ermöglicht ein automatisches Schließen des Schiebedachs beziehungsweise der Fensterscheibe durch das Schließen der Fahrzeugtür.

Die Verwendung einer Gewindespindel gestattet den relativ problemlosen Einbau einer Not-Handbedienung für den Fall eines Stromausfalls oder eines Motordefekts.

Es wird darauf hingewiesen, daß der in der vorliegenden Anmeldung verwendete Begriff "Hubantrieb" keine Beschränkung auf eine Hebebewegung (und eine Senkbewegung) der Fensterscheibe oder gar des Schiebedachs bedeutet. Es geht um einen Bewegungsantrieb für das öffnen und Schließen einer Kraftfahrzeug-Fensterscheibe oder eines Kraftfahrzeug-Schiebedachs.

Die Gewindespindel kann insbesondere aus Metall oder Kunststoff bestehen. Insbesondere bei einer gekrümmten Gewindespindel ist ferner eine Ausführung bevorzugt, bei der ein schraubenlinienförmig gewickelter Außenbereich, beispielsweise aus einem Draht mit beispielsweise dreieckigem Querschnitt, auf einem biegbaren oder nachgiebigen Kernbereich aus Metall aus Kunststoff besfestigt ist. Auf diese Art kann man beispielsweise die Gewindespindel als gerade Gewindespindel fertigen und ihr bei der Montage eine praktisch beliebig gekrümmte Gestalt geben.

Die Erfindung ist nicht darauf beschränkt, daß die Fensterscheibe oder das Schiebedach beim öffnen und Schließen eine geradlinige Bewegung im wesentlichen rechtwinklig zur Oberkante der Scheibe bzw. zur Vorderkante des Schiebedachs vollführt. Auch andere Bewegungsbahnen sind möglich, wobei die am ehesten in Betracht kommenden die folgenden sind: Schrägbewegung der Scheibe nach vornunten oder nach hinten-unten beim Absenken. "Kippen" der Scheibe im wesentlichen in ihrer Ebene während des Absenkens, so daß deren Hinterkante stärker oder weniger stark nach unten wandert als deren Vorderkante. Räumliches Herausbewegen der Scheibe (evtl. in ihrem hinteren oder vorderen oder unteren Bereich stärker als im restlichen Bereich) aus ihrer Ebene während des Absenkens. Das gleiche gilt analog umgekehrt für das Anheben der Scheibe. Außerdem gilt das Gleiche analog für Schiebedächer, wo es insbesondere um das Absenken des hinteren Schiebedachbereichs zum Beginn der Öffnungsbewegung geht.

Komplexe Bewegungen wie die vorstehend genannten können durch entsprechend gestaltete Führungen der Scheibe bzw. des Schiebedachs erzwungen werden. Die Erfindung bietet jedoch die Möglichkeit, derartige komplexere Bewegungen auch durch die Gestalt bzw. die Anordnung der Gewindespindel(n) zu erzwingen, entweder ausschließlich durch die Gestalt und/oder die Anordnung der Gewindespindel(n) oder unterstützt durch - in diesem Fall beispielsweise einfacher ausgebildete - Führungen. Dies gilt in erster Linie für den Fall, daß zwei oder gar mehr als zwei Gewindespindeln vorgesehen sind. Die Gewindespindeln müssen nicht exakt parallel zueinander sein, sondern können auch in gewissem Ausmaß windschief zueinander gestellt sein. Wenn die Gewindespindeln nicht parallel zueinander verlaufen, ist es in der Regel erforderlich, daß die Gewindespindeln und/oder die Gegenmuttern und/oder die Elektrokleinmotoren nachgiebig bzw. gelenkig an ihrer betreffenden Basis befestigt sind.

Es wird besonders darauf hingewiesen, daß es infolge der Erfindung möglich ist, beispielsweise eine im Vergleich zur Vorderkante stärkere Absenkung der Hinterkante der Scheibe einfach dadurch zu erreichen, daß der hintere Elektrokleinmotor rascher gedreht wird (oder eine größere Steigung der hinteren Gewindespindel vorgesehen ist) als der vordere Elektrokleinmotor. Dies kann elektronisch gesteuert sein.

Weiter vorn sind gekrümmte Scheiben angesprochen worden. Die Erfindung bezieht sich jedoch analog auch auf den Fall gekrümmter Schiebedächer. Die Krümmung der gewünschten oder erforderlichen Bewegungsbahn der Scheibe oder des Schiebedachs muß nicht mit der Krümmung der Scheibe oder des Schiebedachs übereinstimmen.

Um Verspannungen der Scheibe bzw. des Schiebedachs zwischen der Führung und der Gewindespindel (den Gewindespindeln) sicher zu vermeiden, kann eine bewegliche oder gelenkige oder nachgiebige Anbringung des Elektrokleinmotors und/oder der Gewindespindel(n) an der betreffenden Anbringungsbasis vorgesehen sein.

Im folgenden werden Ausführungsbeispiele anhand der Zeichnung näher erläutert. Es zeigen:
- Fig. 1 und 2: jeweils eine Ausführungsform eines Hubantriebs für eine Fensterscheibe eines Kraftfahrzeugs (Fig. 1a, 2a) und eines Hubantriebs für eine Schiebedach eines Kraftfahrzeugs (Fig 1b, 2b);
- Fig. 3: eine Draufsicht auf eine Fensterscheibe mit Hubantrieb;
- Fig. 4: eine Seitenansicht der Anordnung nach Fig 1; und
- Fig. 5: eine gegenüber der Ausführungsform nach Fig. 1 abgewandelte Ausführungsform.

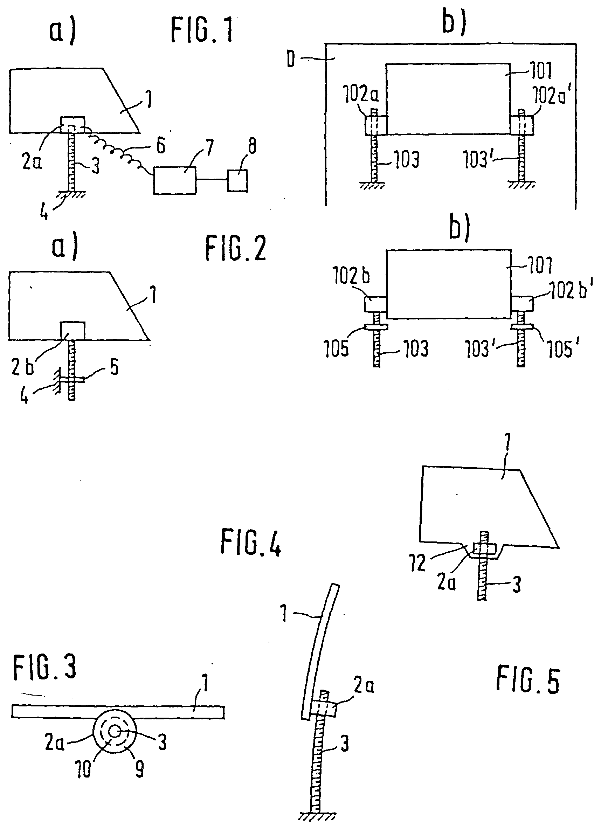

In den Fig. 1a, 2a, und 3 bis 5 ist jeweils eine Fensterscheibe 1 mit einem unten noch näher erläuterten Hubantrieb dargestellt, während die Fig. 1b und 2b ein Schiebedach mit zugehörendem Hubantrieb darstellen.

Wie aus der Zeichnung ersichtlich, enthalten die Ausführungsformen für die Fensterscheibe einen Einzel-Hubantrieb, während für das Schiebedach ein Doppel-Hubantrieb vorgesehen ist. Es kann aber auch für die Fensterscheibe ein Doppel-Hubantrieb vorgesehen sein, und auch für den Schiebedach-Antrieb kann ein Einfach-Hubantrieb verwendet werden.

Gemäß Fig. 1a ist an der Unterkante einer Fensterscheibe 1 ein Elektrokleinmotor 2a angeklebt. Der Elektrokleinmotor 2a besitzt einen äußeren, feststehenden Stator 9 (siehe Fig. 3) und einen radial innen liegenden Rotor 10 mit einem Innenloch. In dem Innenloch ist ein Innengewinde ausgebildet, welches mit einer Gewindespindel 3 in Eingriff steht. Gemäß Fig. la ist ein unteres Ende der Gewindespindel an einem Rahmenteil 4 drehfest befestigt. In diesem Fall ist das Rahmenteil der untere Bereich im Inneren einer Kraftfahrzeugtür. Über eine Zuleitung 6 steht der Elektrokleinmotor 2a mit einer Kommutier- und Steuerungselektronik 7 in Verbindung, welche ihrerseits mit einer Betätigungseinheit 8 gekoppelt ist, die Schalter zum Betätigen der Fensterscheibe beinhaltet.

Wird der Elektromotor 2a an Spannung gelegt, so dreht sich der Rotorteil 10, so daß dessen Innengewinde an der Gewindespindel 3 entlangläuft, wobei die Bewegungsrichtung der Fensterscheibe 1 von der Drehrichtung des Motors abhängt. Gemäß Fig. 1a kann die Fensterscheibe 1 so weit abgesenkt werden, bis der Elektromotor 2a sich in der Nähe des Rahmenteils 4 befindet.

Fig. 1b zeigt einen Doppel-Hubantrieb für ein in einem angedeuteten Dachbereich D angeordnetes Schiebedach 101. An den Seiten des Schiebedachs 101 ist "in Fahrtrichtung gesehen" hinten ein Paar von Elektrokleinmotoren 102a, 102a' befestigt. Diese sind genauso ausgebildet wie der in Fig. la dargestellte Elektrokleinmotor 2a. Zwei parallele Gewindespindeln 103 und 103' sind mit einem Ende im hinteren Dachbereich, hier als Rahmenteil bezeichnet, befestigt. Die Elektrokleinmotoren werden von einer hier nicht dargestellten Kommutier- und Steuerungselektronik ähnlich der in Fig. 1a dargestellten Kommutier- und Steuerungselektronik 7 synchron betrieben, so daß das Schiebedach 101 parallel zur Richtung der Gewindespindeln 103, 103' verfahren wird.

Fig. 2a zeigt eine Ausführungsform, bei der das eine Ende der Gewindespindel drehfest mit dem Rotor eines Elektrokleinmotors 2b gekoppelt ist. Der Elektromotor 2b ist auch hier am unteren Rand der Fensterscheibe 1 befestigt. Am Rahmenteil 4 ist eine Gegenmutter 5 befestigt, die mit der Gewindespindel 3 in Eingriff steht. Der Abstand zwischen der Gegenmutter 5 und dem unteren Rand der Fensterscheibe 1 entspricht etwa dem Hub der Fensterscheibe 1. Entsprechend viel Platz ist unterhalb der Gegenmutter 5 vorgesehen. Wenn der Elektrokleinmotor 2b in die eine oder die andere Richtung gedreht wird, dreht sich die Gewindespindel 3, so daß mit ihr die Fensterscheibe 1 nach oben oder nach unten verfahren wird. Fig. 2b zeigt eine entsprechende Ausführungsform für das Schiebedach 101. An beiden Seiten des Schiebedachs befindet sich jeweils ein Hubantrieb, bestehend aus einem Elektrokleinmotor 102b bzw. 102 b', einer Gewindespindel 103 bzw. 103' und einer Gegenmutter 105 bzw. 105'.

Die Gewindespindel 3 in Fig. 1 steht in Eingriff mit einem Innengewinde des Rotors, wie es in Fig. 3 dargestellt ist. Zur Stabilisierung kann eine seitliche Führung für die Fensterscheibe 1 vorgesehen sein.

Fig. 4 zeigt die Anordnung von Fig. 1a in Seitenansicht. Die Fensterscheibe 1 ist im Vertikalschnitt etwas gekrümmt. Dementsprechend ist auch die Gewindespindel 3 gekrümmt, so daß sich die Fensterscheibe 1 auf einer Kreisbahn parallel zu der gekrümmten Gewindespindel 3 bewegt, wenn der Elektrokleinmotor 2a in Betrieb gesetzt wird.

Während bei den bisher beschriebenen Ausführungsformen der Elektromotor, die Gegenmutter beziehungsweise das eine Ende der Gewindespindel an dem glatten unteren Rand der Fensterscheibe 1 befestigt ist, kann unten an der Fensterscheibe 1 auch eine spezielle Ausformung 12 vorgesehen sein, wie sie in Fig. 5 dargestellt ist. Die Ausformung 12 bietet gerade Platz für den Elektromotor 2a.

Die Kommutier- und Steuerungselektronik 7 gemäß Fig. 1a ist auch bei den anderen Ausführungsformen vorhanden, ist in der Zeichnung jedoch fortgelassen, um die Zeichnung nicht zu überlasten. Diese Elektronik 7 beinhaltet eine Reihe von Funktionen, zum Beispiel eine Speicherfunktion zum Abspeichern bestimmter Stellungen der Fensterscheibe, insbesondere der oberen und der unteren Endstellung oder einer oder mehrerer Zwischenstellungen.
Die Steuerungseinheit 7 sorgt auch für eine bestimmte Hubgeschwindigkeit und -beschleunigung der Fensterscheibe beziehungsweise des Schiebedachs. Bei einem Doppel-Hubantrieb sorgt die Steuerungselektronik 7 auch für den synchronen Betrieb der beiden Elektrokleinmotoren. Insbesondere verzögert die Steuerungselektronik 7 auch die Drehung des Elektromotors bei Annäherung an die jeweilige Endstellung. Die Steuerungseinheit kann direkt am oder in dem Gehäuse des Elektrokleinmotors angebracht sein.

Weiterhin kann die Steuerungselektronik 7 mit dem Sicherungssystem des Fahrzeugs gekoppelt sein. Insbesondere besteht eine Verbindung zu dem Schloß der Fahrzeugtür. Bei Verriegelung der Tür schaltet die Steuerungselektronik 7 automatisch ein Schließen der Fensterscheibe beziehungsweise des Schiebedachs ein.

## Patentansprüche

1. Hubantrieb zur elektrischen Betätigung einer Fensterscheibe oder eines Schiebedachs eines Kraftfahrzeugs, umfassend mindestens einen Elektrokleinmotor (2a, 2b; 102a, 102b) mit einem äußeren, feststehenden Statorteil (9) und einem inneren Rotorteil (10), und eine mit dem Rotorteil (10) zusammenwirkende Gewindespindel (3, 103, 103'), deren Längsachse ebenso wie die Längsachse des Rotorteils (10) im wesentlichen in Hubrichtung angeordnet ist, wobei der Rotorteil (10) konzentrisch zu seiner Längsachse ein Innenloch mit einem Innengewinde aufweist, welches mit der Gewindespindel (3, 103) in Eingriff steht,
**dadurch gekennzeichnet,**
daß der Elektrokleinmotor (2a, 102a) an der Scheibe (1)/dem Schiebedach (101) und die Gewindespindel an einem Rahmenteil (4) befestigt ist.

2. Hubantrieb zur elektrischen Betätigung einer Fensterscheibe oder eines Schiebedachs eines Kraftfahrzeugs, umfassend mindestens einen Elektrokleinmotor (2a, 2b; 102a, 102b) mit einem äußeren, feststehenden Statorteil (9) und einem inneren Rotorteil (10), und eine mit dem Rotorteil (10) zusammenwirkende Gewindespindel (3, 103, 103'), deren Längsachse ebenso wie die Längsachse des Rotorteils (10) im wesentlichen in Hubrichtung angeordnet ist, wobei die Gewindespindel (3; 103) mit einem Ende konzentrisch am Rotorteil (10) fixiert ist.
**dadurch gekennzeichnet,**
daß der Elektrokleinmotor (2b, 102b) an der Scheibe (1)/dem Schiebedach (101) befestigt ist und die Gewindespindel mit einer an dem Rahmenteil (4) fixierten Gegenmutter (5) in Eingriff steht.

3. Hubantrieb nach Anspruch 1 oder 2,
**dadurch gekennzeichnet,**
daß zwei Elektrokleinmotoren (102a, 102a'; 102b, 102b') und zwei zueinander im wesentlichen parallele Spindeln (102, 103') vorgesehen sind und die Elektrokleinmotoren synchron betrieben werden.

4. Hubantrieb nach einem der Ansprüche 1 bis 3,
**dadurch gekennzeichnet,**
daß die Gewindespindel (3) eine Krümmung aufweist, die einer Krümmung der Bewegungsbahn der Scheibe (1)/des Schiebedachs (101) im wesentlichen entspricht.

5. Hubantrieb für eine Fensterscheibe nach einem der Ansprüche 1 bis 4,
**dadurch gekennzeichnet,**
daß der Elektrokleinmotor (2a, 2b) oder das obere Ende der Gewindespindel an einer nach unten weisenden Ausformung (12) der Scheibe befestigt ist.

6. Hubantrieb nach einem der Ansprüche 1 bis 5,
**dadurch gekennzeichnet,**
daß der Elektrokleinmotor an der Scheibe (1)/dem Schiebedach (101) angeklebt ist.

7. Hubantrieb nach einem der Ansprüche 1 bis 6,
**dadurch gekennzeichnet,**
daß die Gewindespindel an mehreren Stellen gelagert ist.

8. Hubantrieb nach einem der Ansprüche 1 bis 7,
**dadurch gekennzeichnet,**
daß der Elektrokleinmotor (2a, 2b; 102a, 102b) als dauermagnetisch erregter Motor mit elektronischer Kommutierung ausgebildet ist.

9. Hubantrieb nach Anspruch 8,
**dadurch gekennzeichnet,**
daß eine Kommutier- und Steuerelektronik (7) direkt an oder in dem Gehäuse des Elektromotors angeordnet ist.

## Claims

1. A power drive for electrical operation of a window pane or sliding roof of a motor vehicle, comprising at least one small electric motor (2a, 2b; 102a, 102b) having an outer stationary stator part (9) and an inner rotor part (10), and a threaded spindle (3, 103, 103') cooperating with the rotor part (10) and having its longitudinal axis disposed substantially in movement direction, just like the longitudinal axis of the rotor part (10), with the rotor part (10) having, concentrically with its longitudinal axis, an inner hole with internal thread engaged with the threaded spindle (3, 103),
characterized in that the small electric motor (2a, 102a) is attached to the pane (1)/the sliding roof (101) and the threaded spindle is mounted on a frame part (4).

2. A power drive for electrical operation of a window pane or a sliding roof of a motor vehicle, comprising at least one small electric motor (2a, 2b; 102a, 102b) having an outer stationary stator part (9) and an inner rotor part (10), and a threaded spindle (3, 103, 103') cooperating with the rotor part (10) and having its longitudinal axis disposed substantially in movement direction, just like the longitudinal axis of the rotor part (10), with the threaded spindle (3; 103) having one end concentrically fixed to the rotor part (10),
characterized in that the small electric motor (2b, 102b) is attached to the pane (1)/the sliding roof (101) and the threaded spindle is in engagement with a counternut (5) fixed on the frame part (4).

3. A power drive according to claim 1 or 2,
characterized in that two small electric motors (102a, 102a'; 102b, 102b') and two substantially parallel spindles (102, 103') are provided and the small electric motors are operated in synchronism.

4. A power drive according to any one of claims 1 to 3,
characterized in that the threaded spindle (3) has a curvature substantially corresponding to a curvature of the path of movement of the pane (1)/the sliding roof (101).

5. A power drive for a window pane according to any one of claims 1 to 4,
characterized in that the small electric motor (2a, 2b) or the upper end of the threaded spindle is attached to a downwardly directed outwardly formed portion (12) of the pane.

6. A power drive according to any one of claims 1 to 5,
characterized in that the small electric motor is adhesively attached to the pane (1)/the sliding roof (101).

7. A power drive according to any one of claims 1 to 6,
characterized in that the threaded spindle is supported at several locations.

8. A power drive according to any one of claims 1 to 7,
characterized in that the small electric motor (2a, 2b; 102a, 102b) is designed as a motor excited by permanent magnets and with electronic commutation.

9. A power drive according to claim 8,
characterized in that a commutation and control electronic system (7) is disposed directly on or in the housing of the electric motor.

## Revendications

1. Commande de levage pour l'actionnement électrique d'une vitre de fenêtre ou d'un toit coulissant d'un véhicule automobile, comportant au moins un petit moteur électrique (2a, 2b ; 102a, 102b) avec une partie de stator (9) extérieure fixe et une partie de rotor (10) intérieure, et une broche filetée (3, 103, 103'), coopérant avec la partie de rotor (10), dont l'axe longitudinal est essentiellement placé, comme l'axe longitudinal de la partie de rotor (10), dans la direction de levage, la partie de rotor (10) présentant, concentriquement à son axe longitudinal, un trou intérieur avec un taraudage, qui est en prise avec la broche filetée (3, 103),
caractérisée,
en ce que le petit moteur électrique (2a, 102a) est fixé sur la vitre (1)/le toit coulissant (101) et la broche filetée sur une partie de cadre (4).

2. Commande de levage pour l'actionnement électrique d'une vitre de fenêtre ou d'un toit coulissant d'un véhicule automobile, comportant au moins un petit moteur électrique (2a, 2b ; 102a, 102b) avec une partie de stator (9) extérieure fixe et une partie de rotor (10) intérieure, et une broche filetée (3, 103, 103'), coopérant avec la partie de rotor (10), dont l'axe longitudinal est essentiellement placé, comme l'axe longitudinal de la partie de rotor (10), dans la direction de levage, la broche filetée (3 ; 103) étant fixée par une extrémité concentriquement à la partie de rotor (10),
caractérisée
en ce que le petit moteur électrique (2b, 102b) est fixé sur la vitre (1)/le toit coulissant (101) et la broche filetée est en prise avec un contre-écrou (5) fixé sur la partie de cadre (4).

3. Commande de levage selon la revendication 1 ou 2,
caractérisée
en ce que sont prévus deux petits moteurs électriques (102a, 102a' ; 102b, 102b') et deux broches (102, 103') sensiblement parallèles entre elles, et les petits moteurs électriques fonctionnent de manière synchrone.

4. Commande de levage selon l'une des revendications 1 à 3,
caractérisée
en ce que la broche filetée (3) présente une courbure, qui correspond sensiblement à la courbure de la trajectoire de la vitre (1)/du toit coulissant (101).

5. Commande de levage pour une vitre de fenêtre selon l'une des revendications 1 à 4,
caractérisée
en ce que le petit moteur électrique (2a, 2b) ou l'extrémité supérieure de la broche filetée est fixé sur une formation (12), dirigée vers le bas, de la vitre.

6. Commande de levage selon l'une des revendications 1 à 5, caractérisée
en ce que le petit moteur électrique est collé sur la vitre (1)/le toit coulissant (101).

7. Commande de levage selon l'une des revendications 1 à 6, caractérisée
en ce que la broche filetée est monté en plusieurs points.

8. Commande de levage selon l'une des revendications 1 à 7, caractérisée
en ce que le petit moteur électrique (2a, 2b ; 102a, 102b) est un moteur excité de manière magnétique permanente avec commutation électronique.

9. Commande de levage selon la revendication 8,
caractérisée en ce qu'une électronique de commutation et de commande (7) est directement placée sur ou dans le boîtier du moteur électrique.
